# EUROPEAN PATENT APPLICATION

(11) **EP 4 557 242 A1**
(43) Date of publication of application: **21.05.2025**
(21) Application number: 23838726.0
(22) Date of filing: 30.06.2023
(51) Int. Cl.: G06V 20/58, G06V 10/764, G06V 10/82, G06V 10/774, G06V 10/42, G06N 3/04, G06N 3/08

(54) **TARGET DETECTION METHOD, COMPUTER DEVICE, COMPUTER-READABLE STORAGE MEDIUM AND VEHICLE**

(30) Priority: 14.07.2022 CN 202210832981
(71) Applicant: Anhui NIO Autonomous Driving Technology Co., Ltd., Hefei, Anhui 230601 (CN)
(72) Inventor: MA, Ningning, Shanghai 201804 (CN)
(74) Representative: Vossius & Partner Patentanwälte Rechtsanwälte mbB
(86) International application number: PCT/CN2023/104326
(87) International publication number: WO 2024/012234

(57) **Abstract**

The invention relates to the technical field of target detection, and specifically provides a target detection method, a computer device, a storage medium, and a vehicle, aiming to tackle the challenge of detecting multiple targets quickly and accurately. The method of the invention includes: extracting image features of an image to be detected by a feature extraction network of a multi-target detection model; and detecting different types of targets respectively by each detection head network according to the image features, wherein the feature extraction network includes a feature pyramid down-sampling network and a plurality of feature pyramid up-sampling networks, the feature pyramid down-sampling network is connected to each feature pyramid up-sampling network respectively by a lateral connection network, each feature pyramid up-sampling network is respectively connected to at least one detection head network, and the shape types of the targets detected by the detection head networks connected to the same feature pyramid up-sampling network are the same. In this way, multiple types of targets can be detected quickly and accuratel

## Description

The present application claims the priority to Chinese Patent Application CN 115205824 A, filed on July 14, 2022, and entitled "TARGET DETECTION METHOD, COMPUTER DEVICE, COMPUTER-READABLE STORAGE MEDIUM, AND VEHICLE", which is incorporated herein by reference in its entirety.

### Technical Field

The invention relates to the technical field of autonomous driving, and specifically provides a target detection method, a computer device, a computer-readable storage medium, and a vehicle.

### Background Art

In the process of controlling autonomous driving of a vehicle, it is necessary to accurately detect targets such as motor vehicles, non-motorized vehicles, pedestrians, traffic signs, and lane lines around the vehicle, thereby planning a trajectory according to the targets to ensure safe driving of the vehicle. At present, a conventional method for detecting the targets described above is mainly to use the neural network technology to construct a corresponding target detection model (a single-task model) for each type of target, and then detect different types of targets respectively by using different single-task models. However, deploying and running a plurality of single-task models on a mobile device such as an in-vehicle system will bring large pressure on computing resources and power consumption of the system. In this regard, the neural network technology can be used to construct a target detection model (a multi-task model) capable of detecting a plurality of types of targets simultaneously, thereby reducing the large pressure on the computing resources and power consumption of the mobile device. However, in the multi-task model described above, target detection tasks for each type of target share the same image features for target detection, leading to the detection accuracy of the multi-task model for each target type being lower than the detection accuracy of the corresponding single-task model. If the trajectory of the vehicle is planned according to target detection results of such a multi-task model, it may be difficult to ensure the safe driving of the vehicle.

Accordingly, there is a need in the field for a new technical solution to solve the problem described above.

### Summary of the Invention

To overcome the above disadvantages, the invention is proposed to provide a target detection method, a computer device, a computer-readable storage medium, and a vehicle that solve or at least partially solve the technical problem of how to quickly and accurately detect multiple targets such as motor vehicles, non-motorized vehicles, pedestrians, traffic signs, and lane lines.

According to a first aspect, a target detection method is provided. The method includes:
obtaining an image to be detected;
extracting image features of the image to be detected by a feature extraction network of a multi-target detection model, and inputting the image features into each detection head network of the multi-target detection model; and
detecting different types of targets respectively by each detection head network according to the image features,
where the feature extraction network includes a feature pyramid down-sampling network and a plurality of feature pyramid up-sampling networks, the feature pyramid down-sampling network is connected to each feature pyramid up-sampling network respectively by a lateral connection network, each feature pyramid up-sampling network is respectively connected to at least one detection head network, and the shape types of the targets detected by the detection head networks connected to the same feature pyramid up-sampling network are the same.

In one technical solution of the target detection method described above, the method further includes: classifying the shape types of the targets detected by the detection head networks in the multi-target detection model in the following steps during construction of the multi-target detection model:
determining target image samples used for model training of the multi-target detection model; and
classifying the shape types of the targets detected by the detection head networks in the multi-target detection model according to the shape of annotation labels of target samples on the target image samples.

In one technical solution of the target detection method described above, the step of "obtaining an image to be detected" specifically includes:
performing image acquisition by a high-precision image acquisition apparatus to obtain the image to be detected.

In one technical solution of the target detection method described above, the method further includes: performing model training of the multi-target detection model in the following step:
performing model training of the multi-target detection model by a knowledge distillation method.

In one technical solution of the target detection method described above, the step of "performing model training of the multi-target detection model by a knowledge distillation method" specifically includes:
obtaining a plurality of first teacher models capable of detecting different types of targets respectively; and
using the knowledge distillation method to enable each first teacher model to respectively guide the multi-target detection model to use target image samples for model training.

In one technical solution of the target detection method described above, the target detection method is applied to a mobile device, and the step of "performing model training of the multi-target detection model by a knowledge distillation method" specifically includes:
obtaining a second teacher model capable of detecting multiple different types of targets respectively; and
using the knowledge distillation method to enable the second teacher model to guide the multi-target detection model to use target image samples for model training.

In one technical solution of the target detection method described above, the shape types of the targets detected by the detection head networks include at least rectangles and lines.

According to a second aspect, a computer device is provided. The computer device includes at least one processor and a storage apparatus configured to store a plurality of program codes, and the program codes are adapted to be loaded and executed by the at least one processor to perform the target detection method in any one of the above technical solutions of the target detection method.

According to a third aspect, a computer-readable storage medium is provided. A plurality of program codes are stored in the computer-readable storage medium, and the program codes are adapted to be loaded and executed by at least one processor to perform the target detection method in any one of the above technical solutions of the target detection method.

According to a fourth aspect, a vehicle is provided, and the vehicle includes the computer device described in the above technical solution of the computer device.

The one or more technical solutions of the invention described above have at least one or more of the following beneficial effects.

In the technical solution of implementing the invention, the image to be detected can be obtained, the image features of the image to be detected are extracted by the feature extraction network of the multi-target detection model, and the image features are input into each detection head network of the multi-target detection model; and different types of targets are detected respectively by each detection head network according to the image features, where the feature extraction network may include a feature pyramid down-sampling network and a plurality of feature pyramid up-sampling networks, the feature pyramid down-sampling network is connected to each feature pyramid up-sampling network respectively by a lateral connection network, each feature pyramid up-sampling network is respectively connected to at least one detection head network, and the shape types of the targets detected by the detection head networks connected to the same feature pyramid up-sampling network are the same.

Through the implementation described above, it is only necessary to deploy a multi-target detection model on a device to detect multiple different types of targets, thereby reducing the large pressure on the computing resources and power consumption of the device. Furthermore, in such a step that "the shape types of the targets detected by the detection head networks connected to the same feature pyramid up-sampling network are the same", the detection head networks that detect targets with the same shape types share the same image features for target detection, thereby simultaneously increasing the detection accuracy of the targets with the same shape types, and avoiding the detection interference from other targets with different shape types.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic flowchart of main steps of a target detection method according to an embodiment of the invention;
FIG. 2 is a schematic diagram of connection between a feature pyramid down-sampling network and one feature pyramid up-sampling network;
FIG. 3 is a schematic diagram of application scenarios of a target detection method according to an embodiment of the invention; and
FIG. 4 is a schematic flowchart of main steps of a method for classifying the shape types of targets detected by detection head networks in a multi-target detection model according to an embodiment of the invention.

### Detailed Description of Embodiments

Some implementations of the invention are described below with reference to the accompanying drawings. Those skilled in the art should understand that these implementations are merely used to explain the technical principles of the invention, and are not intended to limit the scope of protection of the invention.

In the description of the invention, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory.

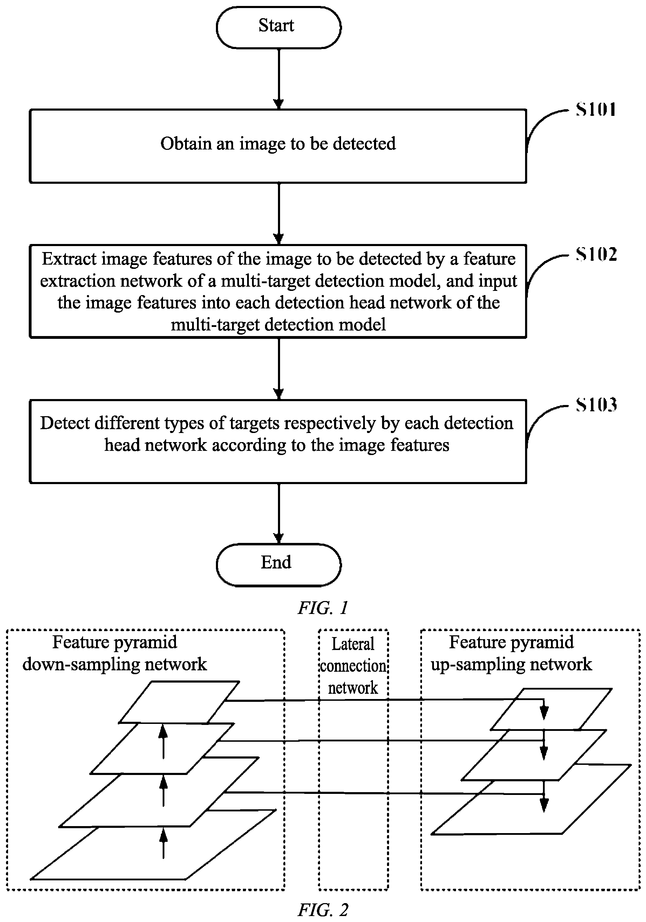

Referring to FIG. 1, FIG. 1 is a schematic flowchart of main steps of a target detection method according to an embodiment of the invention. As shown in FIG. 1, the target detection method in this embodiment of the invention mainly includes the following steps S101 to S 103.

Step S101: Obtain an image to be detected.

In this embodiment, image acquisition can be performed by an image acquisition apparatus to obtain the image to be detected. Moreover, in some implementations, in order to increase the accuracy of target detection, image acquisition can be performed by a high-precision image acquisition apparatus to obtain the image to be detected. According to the image to be detected that is acquired by the high-precision image acquisition apparatus, not only can close-range targets be accurately detected, but long-range targets can also be accurately detected.

The definition of an image refers to an image resolution. A high-precision image refers to an image with a resolution greater than a preset resolution threshold, where the preset resolution threshold refers to 720p. The high-precision image acquisition apparatus refers to an image acquisition apparatus for performing image acquisition to obtain high-precision images. In some preferred implementations, the resolution of the high-precision image acquired by the high-precision image acquisition apparatus is 4k.

Step S102: Extract image features of the image to be detected by a feature extraction network of a multi-target detection model, and input the image features into each detection head network of the multi-target detection model.

In this embodiment, the multi-target detection model includes at least a feature extraction network and a plurality of detection head networks, the feature extraction network may be configured to extract the image features of an input image, and each detection head network may be respectively configured to detect different types of targets according to the image features extracted by the feature extraction network to obtain information such as the type and position of the corresponding target.

The feature extraction network may include a feature pyramid down-sampling network and a plurality of feature pyramid up-sampling networks, and the feature pyramid down-sampling network is connected to each feature pyramid up-sampling network respectively by a lateral connection network.

Referring to FIG. 2, FIG. 2 illustrates a connecting structure between a feature pyramid down-sampling network and one feature pyramid up-sampling network by a lateral connection network. In this embodiment, each feature pyramid up-sampling network uses a connecting structure the same as that shown in FIG. 2, and is connected to the feature pyramid down-sampling network respectively by the lateral connection network. It should be noted that the network structures of the feature pyramid up-sampling network, the feature pyramid down-sampling network, and the lateral connection network are all conventional network structures in the technical field of feature pyramid networks, and the specific network structures of the feature pyramid up-sampling network, the feature pyramid down-sampling network, and the lateral connection network are not limited in this embodiment of the invention. In addition, it should also be noted that those skilled in the art can use conventional detection head networks in the technical field of target detection to construct detection head networks used for detecting different types of targets respectively, which is also not specifically limited in this embodiment of the invention.

Further, each feature pyramid up-sampling network is respectively connected to at least one detection head network, and the shape types of the targets detected by the detection head networks connected to the same feature pyramid up-sampling network are the same. That is to say, the detection head networks that detect targets with the same shape types in the multi-target detection model are connected to the same feature pyramid up-sampling network, and share the image features output by the feature pyramid up-sampling network.

The shape types of the targets detected by the detection head networks include at least rectangles and lines. For example, the detection head networks that detect targets with the shape types of rectangles in the multi-target detection model may be together connected to a feature pyramid up-sampling network, and the detection head networks that detect targets with the shape types of lines in the multi-target detection model may be together connected to another feature pyramid up-sampling network.

In some implementations, if there are a large number of detection head networks that detect targets with the same shape types in the multi-target detection model, the detected targets may be further categorized according to their dynamic/static type, and thus, both the shape type and dynamic/static type of the targets detected by the detection head networks connected to the same feature pyramid up-sampling network are the same, where the dynamic/static type of targets include dynamic and static. For example, vehicles, persons, and non-motorized vehicles are categorized as dynamic targets, and traffic signs, traffic lights, and lane lines are categorized as static targets.

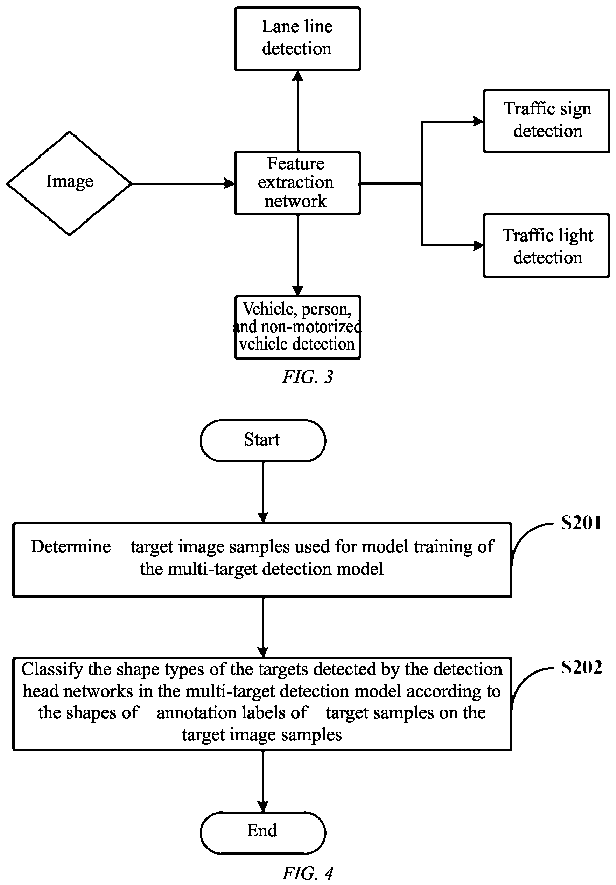

As shown in FIG. 3, in some application scenarios of this embodiment of the invention, targets include six types of targets, namely vehicles, persons, non-motorized vehicles, traffic lights, traffic signs, and lane lines, where the shape types of vehicles, persons, non-motorized vehicles, traffic lights, and traffic signs are rectangles, and the shape types of lane lines are lines. The multi-target detection model may include one feature extraction network and six detection head networks (a vehicle detection head network, a person detection head network, a non-motorized vehicle detection head network, a traffic light detection head network, a traffic sign detection head network, and a lane line detection head network), where the feature extraction network includes three feature pyramid up-sampling networks, one feature pyramid up-sampling network is respectively connected to the vehicle detection head network, the person detection head network, and the non-motorized vehicle detection head network, one feature pyramid up-sampling network is respectively connected to the traffic light detection head network and the traffic sign detection head network, and one feature pyramid up-sampling network is connected to the lane line detection head network. The vehicle detection head network, the person detection head network, and the non-motorized vehicle detection head network share the same image features for respectively performing vehicle, person, and non-motorized vehicle detection, the traffic light detection head network and the traffic sign detection head network share the same image features for respectively performing traffic light and traffic sign detection, and the lane line detection head network does not share image features with other detection head networks.

Step S103: Detect different types of targets respectively by each detection head network according to the image features.

In this embodiment, the detection head networks may detect which types of targets in the image to be detected, positions of these targets, and other information according to the image features.

Based on the method described in step S101 to step S103, the detection head networks that detect targets with the same shape types in the multi-target detection model can share the same image features, thereby simultaneously increasing the detection accuracy of the targets with the same shape types, and avoiding the detection interference from other targets with different shape types.

The multi-target detection model in this embodiment of the invention is further described below.

In this embodiment of the invention, a model structure of the multi-target detection model can be constructed first, and then, model training is performed on the multi-target detection model after the model structure is constructed to obtain a trained multi-target detection model, so that the trained multi-target detection model can be used for performing the target detection method described in step S 101 to step S103.

### 1. Model construction of multi-target detection model

In this embodiment of the invention, the shape types of the targets detected by the detection head networks can be classified during construction of the model structure of the multi-target detection model, so that the number of the detection head networks in the multi-target detection model can be determined, and the shape type of the target detected by each detection head network can also be determined. Specifically, referring to FIG. 4, in this embodiment, the shape types of the targets detected by the detection head networks in the multi-target detection model can be classified by the following steps S201 to S202.

Step S201: Determine a target image sample used for model training of the multi-target detection model.

The target image sample refers to an image including a target sample, each target image sample includes a annotation label of the corresponding target sample, the annotation label includes at least the position information of the target sample on the target image sample, and the shape of the annotation label is similar to the shape of the target sample, that is, the shape types of the annotation label and the target sample are the same. For example, if the target sample is a person, then the annotation label is a rectangular bounding box around the person, and the shape types of both the person and the annotation label are rectangles.

Step S202: Classify the shape types of the targets detected by the detection head networks in the multi-target detection model according to the shapes of annotation labels of target samples on the target image samples.

In this embodiment, first, it is possible to determine which shape types exist according to the shapes of the annotation labels of the target samples on the target image samples; then, the number of the detection head networks in the multi-target detection model is determined according to the number of the target types (such as six types, namely vehicles, persons, non-motorized vehicles, traffic lights, traffic signs, and lane lines); and finally, the shape type of the target detected by each detection head network is determined, that is, the classification of the shape types of the targets detected by the detection head networks in the multi-target detection model is completed.

For example, assuming that target image samples used for model training of the multi-target detection model include target image samples of six types of target samples, namely vehicles, persons, non-motorized vehicles, traffic lights, traffic signs, and lane lines, the existence of two shape types, namely a rectangle and a line, can be determined according to the shapes of annotation labels of target samples on the target image samples, and it can also be determined that six detection head networks, namely a vehicle detection head network, a person detection head network, a non-motorized vehicle detection head network, a traffic light detection head network, a traffic sign detection head network, and a lane line detection head network, need to be arranged, where the shape types of the targets detected by the six detection head networks, namely the vehicle detection head network, the person detection head network, the non-motorized vehicle detection head network, the traffic light detection head network, the traffic sign detection head network, and the lane line detection head network, are rectangles, rectangles, rectangles, rectangles, rectangles, and lines in sequence. Finally, according to the principle that "the shape types of the targets detected by the detection head networks connected to the same feature pyramid up-sampling network are the same", "the vehicle detection head network, the person detection head network, the non-motorized vehicle detection head network, the traffic light detection head network, and the traffic sign detection head network" with the shape types of rectangles can be together connected to one feature pyramid up-sampling network, and the lane line detection head network with the shape type of a line can be connected to another feature pyramid up-sampling network.

By using the method described in step S201 to step S202, the shape types of the targets detected by different detection head networks can be accurately classified according to the detection capabilities of various types of targets required by the multi-target detection model. In this way, in such a step that "the shape types of the targets detected by the detection head networks connected to the same feature pyramid up-sampling network are the same", the detection head networks that detect targets with the same shape types can share the same image features, thereby simultaneously increasing the detection accuracy of the targets with the same shape types, and avoiding the detection interference from other targets with different shape types.

### 2. Model training of multi-target detection model

In this embodiment of the invention, a knowledge distillation method can be used for performing model training of the multi-target detection model.

The knowledge distillation method can distill the knowledge in a trained teacher model into the multi-target detection model to be trained, thereby obtaining a trained multi-target detection model.

In some implementations, the trained teacher model may be composed of a plurality of first teacher models capable of detecting different types of targets respectively. That is, in this implementation, a plurality of first teacher models capable of detecting different types of targets respectively can be used for performing model training of the multi-target detection model to be trained, thereby obtaining a trained multi-target detection model. Specifically, in this implementation, model training can be performed on the multi-target detection model to be trained by the following step 11 to step 12.

Step 11: Obtain a plurality of first teacher models capable of detecting different types of targets respectively.

In this implementation, each first teacher model has higher target detection accuracy, that is, each first teacher model has a higher target detection capability. In some implementations, a model structure with a relatively large scale can be used for constructing the first teacher model to increase the learning capability of the first teacher model, thereby increasing the target detection capability of the first teacher model. That is to say, compared to the multi-target detection model to be trained, the model structure of the first teacher model is more complex and consumes more computing resources.

Step 12: Use the knowledge distillation method to enable each first teacher model to respectively guide the multi-target detection model to use a target image sample for model training.

The knowledge distillation method can distill the knowledge in each first teacher model into the multi-target detection model to be trained, thereby obtaining a trained multi-target detection model.

It should be noted that those skilled in the art can use a conventional knowledge distillation method in the technical field of machine learning to enable each first teacher model to respectively guide the multi-target detection model to use target image samples for model training. The specific principles and methods of knowledge distillation are not to be described in detail in this embodiment of the invention.

According to step 11 to step 12 described above, a plurality of first teacher models can be used for completing the model training of the multi-target detection model to be trained, so that the multi-target detection model has higher detection accuracy for each type of target (the type of the target that can be detected by each first teacher model).

In other implementations, the multi-target detection model is used for performing the target detection method described in step S 101 to step S103 on a mobile device. In addition to performing model training of the multi-target detection model by the method described in step 11 to step 12, a second teacher model capable of detecting multiple different types of targets respectively can also be used for performing model training of the multi-target detection model to be trained, thereby obtaining a trained multi-target detection model. Specifically, in this implementation, model training can be performed on the multi-target detection model to be trained by the following step 21 to step 22.

Step 21: Obtain a second teacher model capable of detecting multiple different types of targets respectively.

The second teacher model refers to a model with a higher target detection capability constructed by a model structure with a relatively large scale. That is, compared to the multi-target detection model to be trained, the model structure of the second teacher model is more complex and consumes more computing resources. If the second teacher model is deployed on the mobile device, it will bring large pressure on the computing resources and power consumption of the mobile device.

Step 22: Use the knowledge distillation method to enable the second teacher model to guide the multi-target detection model to use a target image sample for model training.

The knowledge distillation method can distill the knowledge in the second teacher model into the multi-target detection model to be trained, thereby obtaining a trained multi-target detection model.

It should be noted that those skilled in the art can use a conventional knowledge distillation method in the technical field of machine learning to enable the second teacher model to guide the multi-target detection model to use target image samples for model training. The specific principles and methods of knowledge distillation are not to be described in detail in this embodiment of the invention.

According to step 21 to step 22 described above, a second teacher model can be used for completing the model training of the multi-target detection model to be trained, so that the multi-target detection model achieves high detection accuracy for each type of target (the types of the targets that can be detected by the second teacher model).

It should be noted that, although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiments may be implemented. The computer program includes computer program code, and the computer program code may be in the form of source code, target code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention further provides a computer device. In an embodiment of the computer device according to the invention, the computer device includes at least one processor and a storage apparatus. The storage apparatus may be configured to store a program for performing the target detection method in the above method embodiment, and the processor may be configured to execute a program in the storage apparatus. The program includes but is not limited to the program for performing the target detection method in the above method embodiment. For ease of description, only parts related to the embodiments of the invention are shown. For specific technical details that are not disclosed, refer to the method part of the embodiments of the invention. The computer device may be a control device formed by various electronic devices.

Further, the invention further provides a computer-readable storage medium. In the computer-readable storage medium embodiment according to the invention, the computer-readable storage medium may be configured to store a program for performing the target detection method in the above method embodiment, and the program may be loaded and executed by at least one processor to implement the above target detection method. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention further provides a vehicle. In an embodiment of a vehicle according to the invention, the vehicle may include the computer device described in the above embodiment of the computer device. In this embodiment, the vehicle may be a self-driving vehicle, an autonomous vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the invention have been described with reference to an implementation shown in the accompanying drawings. However, it would have been readily understood by those skilled in the art that the scope of protection of the invention is obviously not limited to these specific implementations. Without departing from the principles of the invention, those skilled in the art may make equivalent changes or replacements to related technical features. The technical solutions obtained after these changes or replacements fall within the scope of protection of the invention.

## Claims

1. A target detection method, comprising:
obtaining an image to be detected;
extracting image features of the image to be detected by a feature extraction network of a multi-target detection model, and inputting the image features into each detection head network of the multi-target detection model; and
detecting different types of targets respectively by each detection head network according to the image features,
wherein the feature extraction network comprises a feature pyramid down-sampling network and a plurality of feature pyramid up-sampling networks, the feature pyramid down-sampling network is connected to each feature pyramid up-sampling network respectively by a lateral connection network, each feature pyramid up-sampling network is respectively connected to at least one detection head network, and the shape types of the targets detected by the detection head networks connected to the same feature pyramid up-sampling network are the same.

2. The target detection method according to claim **1,** further comprising classifying the shape types of the targets detected by the detection head networks in the multi-target detection model in the following steps during construction of the multi-target detection model:
determining target image samples used for model training of the multi-target detection model; and
classifying the shape types of the targets detected by the detection head networks in the multi-target detection model according to the shapes of annotation labels of target samples on the target image samples.

3. The target detection method according to claim **1,** wherein the step of "obtaining an image to be detected" specifically comprises:
performing image acquisition by a high-precision image acquisition apparatus to obtain the image to be detected.

4. The target detection method according to claim 1, further comprising: performing model training of the multi-target detection model in the following step:
performing model training of the multi-target detection model by a knowledge distillation method.

5. The target detection method according to claim 4, wherein the step of "performing model training of the multi-target detection model by a knowledge distillation method" specifically comprises:
obtaining a plurality of first teacher models capable of detecting different types of targets respectively; and
using the knowledge distillation method to enable each first teacher model to respectively guide the multi-target detection model to use target image samples for model training.

6. The target detection method according to claim 4, wherein the target detection method is applied to a mobile device, and the step of "performing model training of the multi-target detection model by a knowledge distillation method" specifically comprises:
obtaining a second teacher model capable of detecting multiple different types of targets respectively; and
using the knowledge distillation method to enable the second teacher model to guide the multi-target detection model to use target image samples for model training.

7. The target detection method according to claim 2, wherein the shape types of the targets detected by the detection head networks comprise at least rectangles and lines.

8. A computer device, comprising at least one processor and a storage apparatus configured to store a plurality of program codes, wherein the program codes are adapted to be loaded and executed by the at least one processor to perform the target detection method according to any one of claims 1 to 7.

9. A computer-readable storage medium storing a plurality of program codes, wherein the program codes are adapted to be loaded and executed by at least one processor to perform the target detection method according to any one of claims 1 to 7.

10. A vehicle, comprising the computer device according to claim 8.
